# EUROPÄISCHE PATENTSCHRIFT

(11) **EP 0 807 048 B1**
(45) Veröffentlichungstag und Bekanntmachung des Hinweises auf die Patenterteilung: **31.10.2001**
(21) Anmeldenummer: 95941083.8
(22) Anmeldetag: 09.12.1995
(51) Int. Cl.: B62D 5/083

(54) **LENKVENTIL MIT GESCHLOSSENER MITTE**
STEERING VALVE WITH CLOSED CENTRE
SOUPAPE DE BRAQUAGE A CENTRE FERME

(43) Veröffentlichungstag der Anmeldung: 19.11.1997
(73) Patentinhaber: TRW Fahrwerksysteme GmbH & Co. KG, 40547 Düsseldorf (DE)
(72) Erfinder: SPILLNER, Robert, D-40476 Düsseldorf (DE); VILE, David, D-41366 Schwalmtal-Amern (DE); PRITCHARD, Geoffrey, Wrington, Bristol BS18 7PR (GB)
(74) Vertreter: Stenger, Watzke & Ring Patentanwälte
(86) Internationale Anmeldenummer: EP9504854
(87) Internationale Veröffentlichungsnummer: WO9721579

(56) Entgegenhaltungen:
- EP-A- 0 302 267
- EP-A- 0 667 280
- DE-A- 2 426 201
- DE-C- 4 437 168
- GB-A- 997 065

## Beschreibung

Die Erfindung betrifft ein Lenkventil zur Versorgung eines Stellgliedes mit Hydraulikdruck, bestehend aus einer Eingangswelle, einer Ausgangswelle, einem torsionselastischen Element, das mit einem Ende mit der Eingangswelle und dem anderen Ende mit der Ausgangswelle verbunden ist, einer Steuerdruck-Schalteinrichtung und einer Drehmoment/Axialkraft-Wandlereinheit, wobei wenigstens eine Hydraulikleitung in der Eingangswelle zur Zuführung von Steuerdruck ausgebildet ist und wobei die Drehmoment/Axialkraft-Wandlereinheit ein auf der Eingangswelle axial geführter Reaktionskolben ist.

Lenkventile der gattungsgemäßen Art werden insbesondere in ServoLenksystemen eingesetzt. Der Aufbau derartiger Servolenksysteme ist an sich bekannt. Eine mit einer Lenkstange verbundene Eingangswelle ist mit einer mit einem Ritzel versehenen Ausgangswelle verbunden. In bekannter Weise kann den beiden Wellen ein torsionselastisches Element, beispielsweise ein Torsionsstab zwischengeschaltet sein. Das Ritzel wirkt auf die Zahnstange einer Lenkung. Für derartige Lenksysteme ist die Verwendung von Lenkventilen bekannt. Dazu ist eine Steuerdruck-Schalteinrichtung vorgesehen, welche beispielsweise eine mit der Ausgangswelle in Eingriff stehende und die Eingangswelle umgebende Ventilhülse sein kann. Von einer Pumpe wird Hydraulikflüssigkeit durch das System gepumpt. Bei einer relativen Verdrehung der Eingangswelle zur Ventilhülse wird Hydraulikdruck einem Hydraulikmotor zugeführt, welcher die Zahnstangenbewegung in eine der möglichen Richtungen unterstützt.

Ein Ventil ohne Drehmoment/Axialkraft-Wandlereinheit ist aus der DE 37 31 258 A1 bekannt, wobei in der Eingangswelle eine hydraulikführende Leitung ausgebildet ist.

In Servolenksystemen eingesetzte Lenkventile werden grob in zwei Gruppen unterschieden. Ein in Servolenksystemen eingesetzter Typ von Lenkventilen ist das Lenkventil mit sogenannter offener Mitte. In Neutralstellung des Lenkventils mit offener Mitte wird von der Pumpe Hydraulikflüssigkeit mit einem niedrigen Druck durch das offene Ventil in ein Reservoir gepumpt. Eine relative Verdrehung der Eingangswelle zur Ventilhülse bewirkt die Erhöhung des Druckes, welcher dann dem Servomotor zugeführt wird. Der Nachteil von Lenkventilen mit offener Mitte ist, daß auch in Neutralstellung ein ständiger Hydraulikfluß aufrecht erhalten werden muß. Es ist somit eine Verlustleistung vom Antriebsmotor zu erbringen, die sich in erster Linie aus dem Staudruck und dem Volumenstrom herleitet.

Ein derartiges Lenkventil mit offener Mitte ist in der DE 43 17 818 C1 offenbart. Als Drehmoment/Axialkraft-Wandlereinheit ist ein Reaktionskolben mit einem elektrohydraulischen Wandler EHW eingesetzt.

Gattungsgemäße Lenkventile mit offener Mitte sind weiterhin aus der EP-A-0 302 267 und EP-A-0 667 280 bekannt.

Die EP-A-0 667 280 offenbart dabei ein Lenkventil mit offener Mitte, welches alle im Oberbegriff des Hauptanspruches aufgeführten Merkmale aufweist. Bei diesem Lenkventil wird die Hydraulikflüssigkeit über eine in der Eingangswelle geführte Bohrung in einen Druckraum geleitet, welcher einseitig durch einen beweglichen Reaktionskolben begrenzt ist. Der in dem Druckraum aufgebaute Druck greift an der diesen Raum begrenzenden unteren Fläche des Reaktionskolbens an und bewirkt somit eine Verschiebung des Kolbens. Bei dieser Lösung muß der Kolben entlang seiner Außenfläche gegenüber der Ventilhülse mit einem Dichting großen Durchmessers abgedichtet werden.

Das in der EP-A-0 302 267 offenbarte Lenkventil weist dieselben für die Erfindung relevanten Merkmale auf, wie das in der EP 0 667 280 offenbarte Lenkventil. Auch hier wird die Hydraulikflüssigkeit in einer in der Eingangswelle geführten Bohrung in einen Druckraum geleitet, der einseitig durch einen Reaktionskolben begrenzt ist. Durch Aufbau von Hydraulikdruck in einem Druckraum wird der Druckkolben unter Vergrößerung des Druckraumvolumens verschoben. Auch hier muß der Druckkolben entlang seiner Umfangsfläche gegen die Ventilhülse mit einem Dichting großen Durchmessers abgedichtet werden.

Ein anderer in Servolenksystemen eingesetzter Typ von Lenkventilen ist das Lenkventil mit sogenannter geschlossener Mitte. Durch die geschlossene Mittelstellung ist der Hydraulikfluß zu den beiden Zylinderseiten in Neutralstellung des Lenkventils unterbrochen. Damit findet in Neutralstellung auch kein Hydraulikfluß statt. Von einer Pumpe und einem Speicher wird ein Betriebsdruck an das praktisch geschlossene Ventil angelegt, welcher bei Ventilöffnung von der dann in Betrieb genommenen Pumpe lediglich in vorgegebenen Grenzen aufrecht erhalten werden muß. Wegen der auch bei Nichtbetätigung der Lenkung mit Lenkventilen mit offener Mitte auftretenden Verlustleistung sind bei Betrachtung der Leistung die Lenkventile mit geschlossener Mitte in Neutralstellung des Lenkventils überlegen. Diese haben jedoch den Nachteil, daß praktisch keine direkte Zuordnung zwischen einem Eingangsmoment und einem Arbeitsdruck im Zylinder stattfindet. Daher werden im Stand der Technik zusätzliche Maßnahmen ergriffen, um der Bedienperson eine Beziehung zwischen der einzugebenden Lenkkraft und dem resultierenden Hydraulikdruck bereitzustellen. Herkömmliche Sitzventilanordnungen sind nicht unproblematisch, da die Sitzventile einem gewissen Verschleiß unterliegen und einen hohen Fertigungs- und Montageaufwand erfordern. Darüber hinaus stellen sie der Bedienperson ein Schwellmoment entgegen.

Ein Grundproblem bei sämtlichen Ausführungsformen von Lenkventilen der oben genannten Typen ergibt sich aus der Anordnung der Hydraulikleitungen und der Führung der Hydraulikflüssigkeit. Das modular aufgebaute Lenkventil weist im Gehäuse von außen zugängliche, in erster Linie radiale Anschlußbohrungen für Hydraulikleitungen auf. An der Gehäuseinnenwandung sind dementsprechend Kanäle, Nuten und dergleichen ausgebildet, die die Hydraulikflüssigkeit zu den Steuernuten, zu den Wirkflächen von Kolben der Drehmoment/Axialkraft-Wandlereinheiten und dergleichen leiten. Beispielsweise ist es üblich, die Hydraulikflüssigkeit in ringförmigen Nuten zu führen, die je nach Drehposition mit entsprechenden Führungskanälen verbunden werden, um die Hydraulikflüssigkeit an die erforderlichen Orte zu führen oder am Fluß zu hindern. In jedem Fall ergibt sich daraus die Notwendigkeit, Dichtungen mit großem Durchmesser zu verwenden, um die einzelnen Hydraulikflüssigkeits-Führungsbereiche voneinander zu separieren. Dies gilt für die Steuernutenanordnungen ebenso wie insbesondere für die Wirkflächen von Kolben der Drehmoment/Axialkraft-Wandlereinheiten, die durch Dichtungen mit großem Durchmesser von den umliegenden Räumen abgeschottet werden müssen.

Darüber hinaus gibt die Anzahl von an das modulartige Servolenkventil angeschlossenen Hydraulikleitungen auch die Anzahl der erforderlichen Dichtungen vor. Jede zusätzliche Funktion, die den Anschluß einer weiteren Hydraulikleitung erfordert, macht somit gleichzeitig auch den Einsatz von wenigstens einer, in der Regel zwei Dichtungen erforderlich, die den Führungskanal gegen die benachbarten Bereiche abdichten.

Eine Servolenkung für Kfz. ist aus der DE 24 26 201 A1 bekannt, wobei aus Zwecken der Baugrößenminimierung, nicht jedoch mit Blick auf den Dichtungsverschleiß im Torsionselement eine hydraulikführende Leitung ausgebildet ist.

Die einzusetzenden Dichtungen mit großem Durchmesser weisen zwangsläufig große Berührungsflächen mit den abzudichtenden Gehäusebereichen auf, woraus eine erhebliche Reibung resultiert. Diese Reibung hat bei Verwendung des Servolenkventils einen Verschleiß zur Folge, so daß die Standzeit bekannter Servolenkventile schon allein durch die erforderlichen Dichtungen beschränkt ist. Da die Dichtungen erheblichen Hydraulikdrücken standzuhalten haben, sind die Standzeiten vergleichsweise gering.

Das Auswechseln einer Dichtung macht jedoch eine völlige Demontage des Ventils und eine Neumontage mit anschließender Einstellung erforderlich, ist also nicht wirtschaftlich.

Neben den mit den Dichtungen mit großem Durchmesser verbundenen Nachteilen wie Reibung, ungünstigem Ansprechverhalten und verringerter Standzeit machen die herkömmlichen Ausbildungen von Lenkventilen mit geschlossener Mitte die Anordnung einer Vielzahl von Bauteilen erforderlich. Um die Drehmoment/Axialkraft-Wandlereinheit mit einem rückgeführten Hydraulikdruck beaufschlagen zu können, ist es erforderlich, im Bereich der Hydraulikleitungen zum Stellglied ein Wechselventil anzuordnen, welches den jeweils höheren Druck über eine Hydraulikleitung zum Reaktionskolben zurückführt. Darüber hinaus kommt es häufig zu Leckageverlusten im Bereich des Wechselventils, sowie zu Schaltgeräuschen und Totzeiten beim Schaltvorgang.

Davon ausgehend liegt der vorliegenden Erfindung die **Aufgabe** zugrunde, ein Lenkventil der gattungsgemäßen Art dahingehend weiterzubilden, daß die Zahl der Dichtungen mit großem Durchmesser verringert und Dichtungen mit kleinem Durchmesser verwendet werden können, daß die Anzahl der Bauteile reduziert werden kann und eine verbesserte Führung der Drehmoment/Axialkraft-Wandlereinheit gewährleistet ist.

Zur technischen **Lösung** dieser Aufgabe wird ein gattungsgemäßes Lenkventil bereitgestellt, welches ein Lenkventil mit geschlossener Mitte ist und bei dem der Reaktionskolben eine innenliegende Wirkfläche aufweist.

Somit weist die Drehmoment-Axialkraft-Wandlereinheit als direkt auf der Eingangswelle geführter Reaktionskolben eine der Eingangswelle zugewandte Wirkfläche auf.

Durch die erfindungsgemäße Ausgestaltung ist es nicht mehr erforderlich, im Bereich des Gehäuses einen gegenüber dem anderen Bereich abzudichtenden Hydraulikanschluß für den Rückführ- bzw. Reaktionsdruck vorzusehen. Damit besteht die Möglichkeit, den Hydraulikdruck über die Eingangswelle in einen inneren Bereich, beispielsweise zwischen Eingangswelle und Drehmoment/Axialkraft-Wandlereinheit zu führen, so daß nur Bereiche mit kleinem Durchmesser abgedichtet werden müssen. Dadurch entfallen Dichtungen mit großem Durchmesser, so daß die Reibung und der Dichtungsverschleiß verringert, das Ansprechverhalten verbessert und die Standzeit vergrößert werden. Ebenso werden Schaltgeräusche und Leckagen, wie sie insbesondere bei Wechselventilen auftreten, vermieden.

In vorteilhafter Weise wird vorgeschlagen, daß die Hydraulikleitung derart in der Eingangswelle ausgebildet ist, daß der von der Ventilhülse überdeckte Eingangswellenbereich mit dem von der Drehmoment/Axialkraft-Wandlereinheit überdeckten Eingangswellenbereich verbunden ist. In vorteilhafter Weise wird damit die Möglichkeit geboten, den Reaktionsdruck innerhalb der Eingangswelle zu führen, indem diese direkt über Steuerkantenverbindungen zu einem Reaktionskolben geführt wird. Damit entfallen weitere äußere Anschlüsse und vor allem auch die Anordnung eines Wechselventils, welches durch die einfache Steuerkantenanordnung gebildet werden kann. In vorteilhafter Weise wird dazu vorgeschlagen, daß die Axialbohrung im Ventilhülsen- und im Reaktionskolbenbereich mit Radialbohrungen an die Außenseite der Eingangswelle geführt ist. So kann vorgesehen sein, daß die Eingangswelle eine Axialbohrung im Bereich der Längsmittelachse aufweist, in welcher der Torsionsstab eingesetzt ist. Die Bohrung kann so ausgebildet sein, daß zwischen der Bohrungsinnenwandung und der Torsionsstabaußenseite ein Ringraum verbleibt, der als Hydraulikleitung verwendet werden kann. In diesem Falle ist nur eine Abdichtung im unteren Bereich erforderlich. Auch besteht die Möglichkeit, das Torsionselement selbst hohl auszugestalten.

In vorteihafter Weise wird vorgeschlagen, daß die Drehmoment-Axialkraft-Wandlereinheit als direkt auf der Eingangswelle geführter Reaktionskolben ausgebildet ist. Mit besonderem Vorteil weist der Reaktionskolben eine der Eingangswelle zugewandte Wirkfläche auf.

Durch die Anordnung der Radialbohrungen im Bereich der Hydraulikzuführungen besteht die Möglichkeit, deren äußeren Mündungsbereich als Steuemut auszugestalten, so daß die Wechselventilfunktion durch Steuerkantenüberdeckung realisiert werden kann.

In vorteilhafter Weise wird vorgeschlagen, daß an dem erfindungsgemäßen Servolenkventil eine zweite Axialbohrung im Ausgangswellenbereich ausgebildet ist. In vorteilhafter Weise dient diese zweite Axialbohrung der Hydraulikdruckzuführung.

Durch diese erfindungsgemäße Ausgestaltung wird in erster Linie erreicht, daß die Anzahl von Dichtungen mit großem Durchmesser reduziert werden kann. Dies deshalb, weil nunmehr von innen herangeführte Leitungen einfacher gegenüber von außen herangeführten Leitungen abgedichtet werden können. Die erforderlichen Dichtungen können nunmehr in Bereiche verlegt werden, die vergleichsweise geringe Durchmesser aufweisen, so daß die Reibungsflächen erheblich reduziert werden können. Dadurch werden die Standzeit und das Ansprechverhalten eines Servoventils erhöht.

In erster Linie ermöglicht die erfindungsgemäße Ausgestaltung die Verwendung von Reaktionskolbeneinrichtungen mit innenliegenden Wirkflächen. Durch diese Maßnahme entfallen eine große Zahl von Dichtungen mit großem Durchmesser, die darüber hinaus stärker beansprucht werden, da die Reaktionskolbeneinrichtung axial bewegt wird.

Weitere Vorteile und Merkmale der Erfindung ergeben sich aus der folgenden Beschreibung anhand der Figuren. Dabei zeigen:
- Fig. 1: eine schematische, teilgeschnittene Darstellung eines Ausgangswellenbereiches eines Servolenkventils;
- Fig. 2: eine schematische, teilgeschnittene Darstellung eines Eingangswellenbereiches eines Servolenkventils;
- Fig. 3: einen Schnitt durch die Eingangswelle und die Ventilhülse entlang der Linie A-A in Fig. 2 und
- Fig. 4: einen Schnitt durch die Eingangswelle und die Ventilhülse entlang der Linie B-B in Fig. 2.

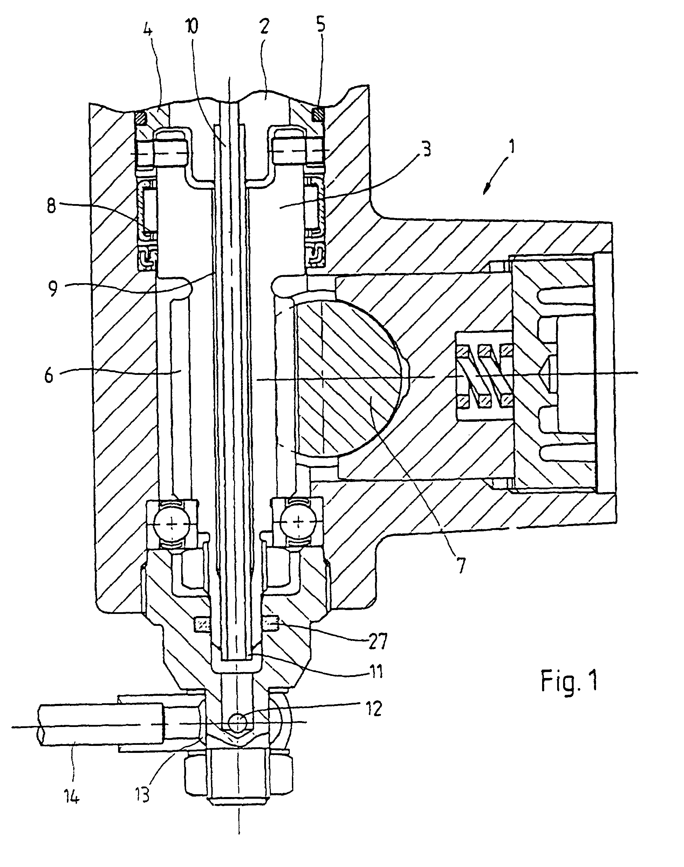

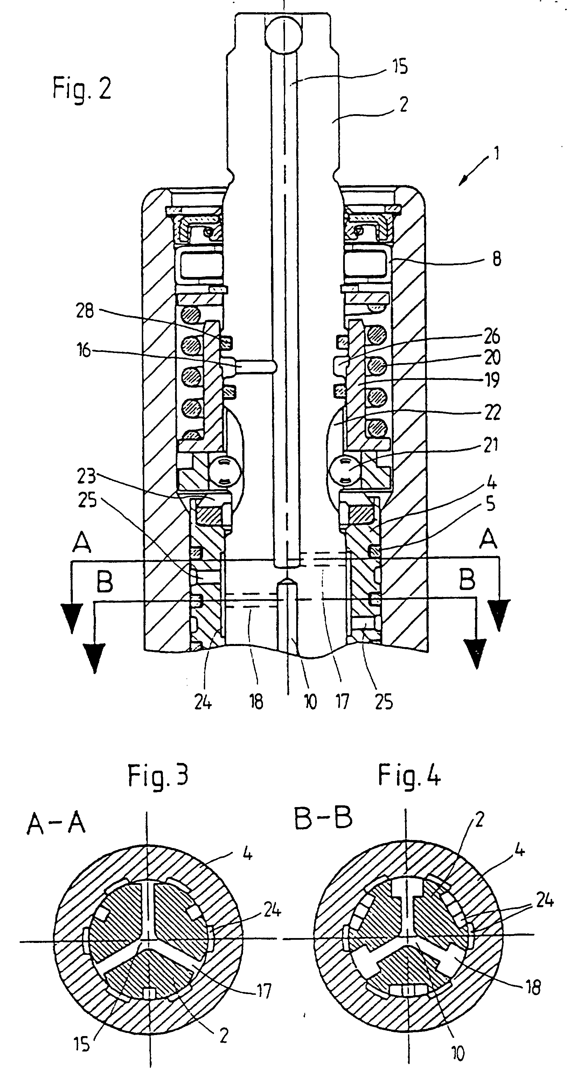

Das in den Figuren 1 und 2 gezeigte Servolenkventil 1 umfaßt eine Eingangswelle 2, die an ihrem freien Ende mit einem nicht gezeigten Lenkgestänge verbunden ist. Weiterhin umfaßt das Servolenkventil 1 eine Ausgangswelle 3, die mit einer Ventilhülse 4 verbunden ist, die die Eingangswelle 2 umfaßt. Die Ventilhülse 4 weist Hydraulikzuführbohrungen und Steuernuten auf, so daß mittels Dichtungen 5 voneinander abgetrennte Bereiche gebildet werden. Die Dichtungen 5 haben einen großen Durchmesser und große Berührungsflächen im Dichtbereich, so daß es hier zu entsprechenden Reibungen kommt.

Die Ausgangswelle 3 weist ein Ritzel 6 auf, welches mit der Zahnstange 7 einer nicht weiter dargestellten Fahrwerksanordnung verbunden ist. Die Wellen sind mittels Lager 8 in das Gehäuse eingesetzt.

Wie die Darstellung in Figur 1 zeigt, ist in der Ausgangswelle 3 eine Axialbohrung 9 ausgebildet, die im unteren Verschlußbereich als Sacklochbohrung fortgeführt und durch eine Radialbohrung 12 mit der Außenseite verbunden ist. Der mit der Radialbohrung 12 versehene Bereich ist in ein eine Ringleitung 13 aufweisende Leitungsgelenk eingesetzt, welches seinerseits mit einer Hydraulikleitung 14 verbunden ist. Diese Figur zeigt auch, daß in der Eingangswelle 2 eine Axialbohrung 10 ausgebildet ist. Die Eingangswelle 2 und die Ausgangswelle 3 sind durch ein in die Axialbohrungen 9, 10 eingesetztes Torsionsrohr 11 verbunden, welches eine Reihe besonderer Funktionen übernimmt. Zum einen dient das Rohr der Durchführung der Axialbohrung vom untersten Ende der Ausgangswelle 3 bis hinein in die Eingangswelle 2. Weiterhin dient das Torsionsrohr der Bereitstellung einer Torsionssteifigkeit gegen die Verdrehung der Eingangswelle 2 gegenüber der Ausgangswelle 3. Wie die Figur 1 zeigt, ist die Axialbohrung 9 bis in den unteren Bereich mit größerem Durchmesser ausgeführt als im untersten Einsatzbereich des Torsionsrohres 11. Dadurch ist die freie Länge des Torsionsrohres festgelegt. Wie die Ausführung in Figur 1 zeigt, wurden durch die Anordnung der Axialbohrung 10 einfach abzudichtende Bereiche mit kleinem Durchmesser gebildet. Im gezeigten Ausführungsbeispiel ist eine Dichtung 27 zwischen dem untersten Verschlußbereich und dem untersten Ende der Ausgangswelle 3 angeordnet. Selbstverständlich hätte das Torsionsrohr auch weitergeführt und gegenüber der Sacklochbohrung oberhalb der Radialbohrung 12 abgedichtet werden können. Wesentlich ist nur, daß anstelle von Dichtungen 5 mit sehr großem Durchmesser Dichtungen 27 mit kleinem Durchmesser verwendet werden können, so daß die Reibung verringert und die Standzeit wegen eines reduzierten Verschleißes erhöht ist.

Wie in Figur 2 gezeigt ist endet die Axialbohrung 10 in der Eingangswelle 2 als Sacklochbohrung. Im gezeigten Ausführungsbeispiel ist eine zweite Axialbohrung 15 in der Eingangswelle ausgebildet, die vom anderen freien Ende bis kurz vor die Axialbohrung 10 geführt ist. Auch diese Axialbohrung ist als Sacklochbohrung ausgebildet. Die Axialbohrung 10 ist über die Radialbohrung 18 und die Axialbohrung 15 über die Radialbohrungen 16, 17 mit der äußeren Oberfläche der Eingangsweite 2 verbunden. Wie die Schnitte in den Figuren 3 und 4 zeigen, handelt es sich bei den Radialbohrungen um eine Mehrzahl sternförmig angesetzter Bohrungen, die im Mündungsbereich steuernutenförmig ausgebildet sind.

Im oberen Bereich der Eingangswelle, die am freien Ende in das Gehäuse mittels eines Lagers 8 eingesetzt und hydraulisch abgedichtet ist, ist ein Reaktionskolben 19 angeordnet, der durch eine Feder 20, im gezeigten Ausführungsbeispiel eine Schraubenfeder, axial vorgespannt ist. Im unteren Bereich sind in Axialnuten 22, die in der Eingangswelle ausgebildet sind, Kugeln 21 angeordnet, die der Axialführung eines Ringelementes dienen, das mit der an der Ventilhülse angeordneten Kugelkalotte 23 eine Kugelkupplung bildet. Durch den durch die Feder 20 belasteten Reaktionskolben 19 werden die nicht gezeigten Kugeln, die in einem Ring geführt sind, in Ausnehmungen gedrückt, die in der Kugelkalotte 23 ausgebildet sind. Wird auf die Eingangswelle 2 ein Drehmoment ausgeübt, werden die Kugeln in der V-förmigen Ausnehmung in der Kugelkalotte 23 bewegt, da die Kugelsenke 23 verdrehfest mit der Ventilhülse 4 verbunden ist. Aufgrund der senkengemäßen Ausbildung werden die Kugeln aufgrund des Drehmomentes axial aus den Kalotten herausgedrückt und schieben den Reaktionskolben 19 entgegen der Federkraft hoch. Durch diese Maßnahme kann eine Zentrierung und/oder eine Kraftrelation hergestellt werden. Die Mittenzentrierung ist für jeden Typ von Servolenkventil günstig. Der Reaktionskolben kann auch mit einem Metallfaltenbalg als Federelement oder dergleichen zusammenwirken.

Durch die Axialbohrung 15 wird im gezeigten Ausführungsbeispiel über die Steuernuten 24 durch die Radialbohrung 17 und die Radialbohrung 18 auf die inneren Wirkflächen 26 des Reaktionskolbens 19 ein hydraulischer Rückführdruck geführt, der den Reaktionskolben in der gleichen Richtung belastet wie die Feder 20. Dadurch wird auf die Kugeln wieder eine Axialkraft ausgeübt, die somit ein zum Bediener gegensinniges Drehmoment erzeugen.

Über die Hydraulikleitung 14, die an einem Ringleitungselement 13 angeordnet ist, wird in die Radialbohrung 12 Hydraulikdruck in die Axialbohrung 9 in der Ausgangswelle bzw. das darin eingesetzte Torsionsrohr 11 geführt. Über das Torsionsrohr 11 wird der zugeführte Hydraulikdruck bis in die Axialbohrung 10 in der Eingangswelle geführt. Gemäß Figur 2 und Figur 4 wird dann über Radialbohrungen 18 der Hydraulikdruck in den Überdeckungsbereich zwischen Eingangswelle 2 und Ventilhülse 4 geführt. Wie insbesondere Fig. 4 entnehmbar ist, kann die Überdeckung derart erfolgen, daß der zugeführte Hydraulikdruck voll in der Leitung stehen kann, ohne das Leckageverluste zu befürchten sind. Das bedeutet, daß keine Abschaltventile in der Hydraulikzuführung angeordnet werden müssen. Ein besonderer Vorteil besteht auch in der Verringerung der kleineren benetzten Innenfläche der Steuerhülse, so daß der statische Druck nur geringere Verformungen der Hülse bewirkt. Dadurch sind kleinere Spielpassungen möglich, wodurch der Gesamtwirkungsgrad der Lenkung erhöht wird. Durch eine relative Verdrehung der Eingangswelle 2 gegenüber der Ventilhülse 4 kommen die steuernutenförmigen Mündungen der Radialbohrungen 18 mit den Steuernuten 24 in Überdeckung, so daß der Hydraulikdruck an die jeweilige Seite eines nicht gezeigten Hydraulikmotors geführt wird. Gleichzeitig wird über die Steuernuten 24 der Druck weitergeleitet bis in die Ebene des Schnittes A-A, der in Figur 3 gezeigt ist.

Die bisherige Beschreibung zeigt, daß durch die Anordnung der Axialbohrungen 9, 10 bereits auf eine Hydraulikdruck-Zuführleitung verzichtet werden kann, die im Bereich der Ventilhülse 4 durch das Gehäuse hindurch und durch die Ventilhülse 4 hindurchgeführt ist. Damit kann auf wenigstens eine Dichtung 5 mit großem Durchmesser verzichtet werden. Diese wird ersetzt durch die Dichtung 27 im Bereich kleinen Durchmessers am unteren Ende der Ausgangswelle 3. Damit kann auch die Ventilhülse entsprechend verkürzt ausgebildet werden, so daß das Servolenkventil 1 insgesamt verkürzt ausgebildet sein kann.

Über die Steuernuten 24 wird, wie beschrieben, der Hydraulikdruck weitergeleitet in die Ebene der Radialbohrungen 17, die, im Mündungsbereich ebenfalls steuernutenförmig ausgebildet, den Hydraulikdruck zur Axialbohrung 15 weiterleiten. Die Axialbohrung 15, die am freien Ende der Eingangswelle 2 verschlossen ist, führt den Druck als Reaktionsdruck bis in die Ebene der Radialbohrung 16, die den Druck in eine Ringleitung und auf die Seite der Wirkflächen 26 des Reaktionskolbens 19 führt. Während die Reaktionsdruckleitung üblicherweise durch die Gehäusewandung auf die Rückseite des Reaktionskolbens erfolgte, waren hier ebenfalls Ringdichtungen mit großem Durchmesser zwischen Reaktionskolben und Gehäusewandung erforderlich. Diese Ringdichtungen sind ebenfalls vollständig entfallen, da durch die Dichtungen 28 mit kleinem Durchmesser der Reaktionskolben-Wirkbereich vollständig abgedichtet ist. Zudem war der Einsatz von Wechselventilen erforderlich, welche jetzt entfallen können. Vor allem wird damit das Ventilklopfen vermieden, ebenso wie eine Leckage beim Schaltvorgang sowie Totzeiten beim Schalten des Wechselventils. Außerdem verbessert sich die Führung des Reaktionskolbens durch die Lagerung auf der Eingangswelle.

Durch die erfindungsgemäße Ausbildung können eine Vielzahl von Dichtungen mit großem Durchmesser vermieden werden. Je nach Verwendung von einer oder mehrerer Axialbohrungen ergeben sich Vorteile durch die Verringerung von Reibung und damit die Vergrößerung von Standzeiten, die Vereinfachung von Bauteilen, die Verbesserung von Funktionen, insbesonere des Ansprechverhaltens und - je nach Anordnung der Bohrungen - die Verkürzung von einzelnen Bauelementen und des Servoventils in seiner Gesamtheit. So führt die Anordnung der Axialbohrung 9 im Torsionselement zu einer Verkürzung der Ventilhülse. Die Anordnung eines Torsionsrohres 11, welches in erster Linie im Bereich der Ausgangswelle eingesetzt ist, führt zu einer Verkürzung des Eingangswellenbereiches, welcher im Stand der Technik üblicherweise als Träger des Torsionsstabes ausgebildet war. Aufgrund der erforderlichen Federcharakteristik des Torsionselementes war eine Mindestlänge des Eingangswellenbereiches vorgeschrieben. Dieser kann nunmehr ebenfalls verkürzt werden.

Das beschriebene Ausführungsbeispiel dient der Erläuterung der Erfindung und ist nicht durch die beschriebene Ausbildung zweier nicht direkt miteinander verbundener Axialbohrungen beschränkt.

### B e z u g s z e i c h e n l i s t e :

- 1: Servolenkventil
- 2: Eingangswelle
- 3: Ausgangswelle
- 4: Ventilhülse
- 5: Dichtung
- 6: Ritzel
- 7: Zahnstange
- 8: Lager
- 9: Axialbohrung
- 10: Axialbohrung
- 11: Torsionsrohr
- 12: Radialbohrung
- 13: Ringleitung
- 14: Hydraulikleitung
- 15: Axialbohrung
- 16: Radialbohrung
- 17: Radialbohrung
- 18: Radialbohrung
- 19: Reaktionskolben
- 20: Feder
- 21: Kugel
- 22: Axialnut
- 23: Kugelkalotte
- 24: Steuernuten
- 25: Hydraulikbohrung
- 26: Wirkflächen
- 27: Dichtung
- 28: Dichtung

## Patentansprüche

1. Lenkventil zur Versorgung eines Stellgliedes mit Hydraulikdruck, bestehend aus einer Eingangswelle (2), einer Ausgangswelle (3), einem torsionselastischen Element (11), das mit einem Ende mit der Eingangswelle und dem anderen Ende mit der Ausgangswelle verbunden ist, einer Steuerdruck-Schalteinrichtung (4) und einer Drehmoment/Axialkraft-Wandlereinheit (19-23), wobei wenigstens eine Hydraulikleitung (15) in der Eingangswelle zur Zuführung von Steuerdruck ausgebildet ist und wobei die Drehmoment/Axialkraft-Wandlereinheit (19-23) ein auf der Eingangswelle axial geführter Reaktionskolben (19) ist,
**dadurch gekennzeichnet,**
**daß** das Lenkventil ein Lenkventil mit geschlossener Mitte ist und daß der Reaktionskolben (19) eine innenliegende Wirkfläche (26) aufweist.

2. Lenkventil nach Anspruch 1, **dadurch gekennzeichnet, daß** die Hydraulikleitung (15) derart ausgebildet ist, daß sie den mit der Steuerdruck-Schalteinrichtung (23) zusammenwirkenden Bereich der Eingangswelle (2) mit dem mit der Drehmoment/Axialkraft-Wandlereinheit (19-23) zusammenwirkenden Bereich der Eingangswelle (2) verbindet.

3. Lenkventil nach einem der vorhergehenden Ansprüche, **dadurch gekennzeichnet, daß** die Axialbohrung (15) mit Radialbohrungen (16,17) an die Außenseite der Eingangswelle geführt ist.

4. Servolenkventil nach einem der vorhergehenden Ansprüche, **dadurch gekennzeichnet, daß** eine Axialbohrung (9) axial durch die Ausgangwelle (3) geführt ist.

5. Servolenkventil nach einem der vorhergehenden Ansprüche, **dadurch gekennzeichnet, daß** eine Axialbohrung (10) durch das Torsionselement (11) geführt ist.

6. Lenkventil nach einem der vorhergehenden Ansprüche, **dadurch gekennzeichnet, daß** die Eingangswelle (2) in eine Spielpassung der Ausgangswelle (3) eingesetzt ist.

## Claims

1. Steering valve for supplying an actuator with hydraulic pressure, consisting of an input shaft (2), an output shaft (3), a torsion-elastic element (11) which is connected at one end with the input shaft and at the other end with the output shaft, a control pressure switch device (4) and a torque/axial force converter unit (19-23) where at least one hydraulic line (15) is formed in the input shaft to supply control pressure and where the torque/axial force converter unit (19-23) is a reaction piston (19) guided axtally on the Input shaft, **characterised in that** the steering valve is a steering valve with a closed centre and that the reaction piston (19) has an interior active surface (26).

2. Steering valve according to claim 1, **characterised in that** the hydraulic line (15) is structured such that it connects the area of the input shaft (2) cooperating with the control pressure switch device (23) with the area of the input shaft (2) co-operating with the torque/axial force converter unit (19-23).

3. Steering valve according to any of the previous claims, **characterised in that** the axial bore (15) with radial bares (16, 17) runs on the outside of the input shaft.

4. Servo steering valve according to any of the previous claims, **characterised in that** an axial bore (9) runs axially through the output shaft (3).

5. Servo steering valve according to any of the previous claims, **characterised in that** an axial bore (10) runs through the torsion element (11).

6. Steering valve according to any of the previous claims, **characterised in that** the input shaft (2) is inserted into a play fit in the axial shaft (3).

## Revendications

1. Soupape de direction pour l'alimentation d'un organe de réglage en pression hydraulique, constituée d'un arbre d'entrée (2), d'un arbre de sortie (3), d'un élément élastique en torsion (11) qui est assemblé par une extrémité à l'arbre d'entrée et par l'autre extrémité à l'arbre de sortie, d'un mécanisme de couplage de pression de commande (4) et d'une unité de conversion moment de couple/force axiale (19 à 23), au moins une conduite hydraulique (15) étant concue dans l'arbre d'entrée pour l'amenée de la pression de commande et l'unité de conversion moment de couple/force axiale (19 à 23) étant un piston de réaction (19) guidé axialement dur l'arbre d'entrée, **caractérisée en ce que** la soupape de direction est une soupape de direction à centre fermé et **en ce que** le piston de réaction (19) comporte une surface active (26) à l'intérieur.

2. Soupape de direction selon la revendication 1, **caractérisée en ce que** la conduite hydraulique (15) est conçue de telle sorte qu'elle relie la zone, coopérant avec le mécanisme de couplage de pression de commande (23), de l'arbre d'entrée (2) à la zone, coopérant avec l'unité de conversion moment de couple/force axiale (19 à 23), de l'arbre d'entrée (2).

3. Soupape de direction selon l'une quelconque des revendications précédentes, **caractérisée en ce que** le trou axial (15) avec trous radiaux (16, 17) passe sur le côté extérieur de l'arbre d'entrée.

4. Soupape de servodirection selon l'une quelconque des revendications précédentes, **caractérisée en ce qu'**un trou axial (9) passe axialement à travers l'arbre de sortie (3).

5. Soupape de servodirection selon l'une quelconque des revendications précédentes, **caractérisée en ce qu'**un trou axial (10) passe à travers l'élément de torsion (11).

6. Soupape de direction selon l'une quelconque des revendications précédentes, **caractérisée en ce que** l'arbre d'entrée (2) est placé dans un ajustement avec jeu de l'arbre de sortie (3).
